# EUROPÄISCHE PATENTSCHRIFT

(11) **EP 1 161 046 B1**
(45) Veröffentlichungstag und Bekanntmachung des Hinweises auf die Patenterteilung: **08.07.2015**
(21) Anmeldenummer: 01000151.9
(22) Anmeldetag: 17.05.2001
(51) Int. Cl.: H04W 28/12, H04W 28/14, H04W 24/00, H04L 12/801, H04L 12/835

(54) **Drahtloses Netzwerk mit Kapazitätsmessung**
Wireless network with flow control
Réseau sans fil avec control du flux

(30) Priorität: 19.05.2000 DE 10024153
(43) Veröffentlichungstag der Anmeldung: 05.12.2001
(73) Patentinhaber: Philips Intellectual Property & Standards GmbH, 20099 Hamburg (DE); Koninklijke Philips N.V., 5656 AE Eindhoven (NL)
(72) Erfinder: Wasel, Herrmann, Dr. Philips Corp. Int. Prop. GmbH, 52064 Aachen (DE); Wasel, Josef, Dr. Philips Corp. Int. Prop. GmbH, 52064 Aachen (DE)
(74) Vertreter: Verweij, Petronella Danielle

(56) Entgegenhaltungen:
- EP-A- 0 765 096
- EP-A- 0 967 742
- ERICSSON: "Usage of Radio Access Bearer Control Procedures" TSGR2#2(99)141: TSG-RAN WORKING GROUP 2 (RADIO LAYER 2 AND RADIO LAYER 3), [Online] 8. - 11. März 1999, XP002251103 Stockholm Gefunden im Internet: <URL:http://www.3gpp.org/ftp/tsg_ran/WG2_R L2/ TSGR2_02/Docs/pdfs/R2-99141.pdf> [gefunden am 2003-08-13]

## Beschreibung

Die Erfindung bezieht sich auf ein drahtloses Netzwerk mit einer Funknetzwerk-Steuerung und mehreren zugeordneten Terminals zum Austausch von Nutz- und Steuerdaten, die jeweils wenigstens einen Puffer zur Zwischenspeicherung von zur Funknetzwerk-Steuerung zu übertragenen Datenpaketen über einen kollisionsbehafteten Kanal und eine Messvorrichtung zur Füllstandsmessung wenigstens eines Puffers enthalten.

Das Dokument (TSGR2#2(99)141: TSG-RAN Working Group 2 (Radio layer 2 and Radio layer 3); "Usage of Radio access Bearer Control Procedures"; Stockholm, 8. - 11. März 1999) zeigt ein drahtloses Netzwerk mit einer Funknetzwerk-Steuerung und mehreren Terminals. In einem Terminal werden in Puffern der RLC-Schicht die Puffer-Füllstände gemessen. Wenn ein RLC-Puffer einen bestimmten Schwellwert überschreitet, dann sendet das zugehörige Terminal einen Bericht über die Messung an die Funknetzwerk-Steuerung. Eine physikalische Kanal-Rekonfigurierung kann dann die Funknetzwerk-Steuerung durchführen. Der Messbericht enthält mehrere Bytes fur eine Steuerungs-Nachricht und das Messergebnis über den Füllstand des RLC-Puffers.

Aus dem Dokument "3rd Generation Partnership Project; 3G TS 25.301 version 3.4.0, Radio Interface Protocol Architecture", ist ein drahtloses Netzwerk mit einer Funknetzwerk-Steuerung und mehreren Terminals bekannt. In einem Terminal werden (gemäss 3G TS25.331, version 3.2.0, RRC Protocol Specification, Abschnitt 14.4) in Puffern der RLC-Schicht (RLC = Radio Link Control) die Füllstände gemessen und bei Überschreiten eines Schwellwertes eine Nachricht über einen kollisionsbehafteten Kanal (RACH) an die Funknetzwerk-Steuerung gesendet. Die Funknetzwerk-Steuerung teilt dem betreffenden Terminal dann mit, dass dieser zukünftig Datenpakete nicht über den kollisionsbehafteten Kanal, sondern über einen dedizierten Kanal (Nutzkanal) senden soll. Die Nachricht über das Erreichen der Füllstände umfasst mehrere Bytes und bedeutet eine zusätzliche Verkehrsbelastung des kollisionsbehafteten Kanals.

Der Erfindung liegt die Aufgabe zugrunde, ein drahtloses Netzwerk zu schaffen, bei dem die Verkehrsbelastung gleichmässiger verteilt wird.

Die Aufgabe wird durch ein drahtloses Netzwerk der eingangs genannten Art dadurch gelöst,
dass wenigstens eines der mehreren zugeordneten Terminals bei Überschreiten einer Füllstandsschwelle eines Puffers oder mehrerer Puffer zur Sendung einer Signalisierungssequenz zu einem von der Funknetzwerk-Steuerung jeweils vorgegebenen Startzeitpunkt vorgesehen ist,
dass die Funknetzwerk-Steuerung eine Vorrichtung zur Korrelation einer von dem betreffenden Terminal ausgesendeten Signalisierungssequenz und zur Detektion des aus einer empfangenen und korrelierten Signalisierungssequenz entstandenen Impulses enthält und dass die Funknetzwerk-Steuerung nach Detektion einer dem betreffenden Terminal zugeordneten Signalisierungssequenz zur Sendung einer Anweisung an das betreffende Terminal zur weiteren Übertragung der Datenpakete einen nur dem Terminal zugeordneten Kanal zu verwenden vorgesehen ist.

Unter dem erfindungsgemässen drahtlosen Netzwerk ist ein Netzwerk mit wenigstens einer Funkzelle zu verstehen, in denen jeweils eine Funknetzwerk-Steuerung und mehrere Terminals Steuer- und Nutzdaten drahtlos übertragen. Eine drahtlose Übertragung dient zur Übertragung von Informationen z B. über Funk-, Ultraschall- oder Infrarotwege.

Der durch eine Signalisierungssequenz und einen Sendezeitpunkt eindeutig bestimmte Signalisierungskanal kann jeweils einem Puffer in einem Terminal zugewiesen werden, um genau das Überschreiten einer vorgegebenen Füllstandsschwelle in diesem Puffer anzuzeigen. Einfacher ist es, wenn die Funknetzwerk-Steuerung einem Terminal einen einzigen Signalisierungskanal zuordnet, damit das Terminal das Überschreiten der Schwelle des Füllstandes wenigstens eines Puffers oder der Summe der Füllstände aller Puffer über diesen Signalisierungskanal anzeigt. Die Übertragung einer Signalisierungssequenz kann als Verkehrslast-Mitteilung betrachtet werden. Ein Terminal führt infolge einer Anweisung der Funknetzwerksteuerung die weitere Datenübertragung auf einem anderen beispielsweise weniger belasteten Kanal (insbesondere dezidierten Kanal) fort.

Der Vorteil der Verwendung des durch Signalisierungssequenz und Sendezeitpunkt bestimmten exklusiven Signalisierungskanals zur Mitteilung einer Schwellenüberschreitung liegt darin, dass deutlich weniger Daten an die Funknetzwerksteuerung geschickt werden müssen. Da der Signalisierungskanal einem Terminal exklusiv zugeteilt ist, besteht anders als bei der Verwendung des kollisionsbehafteten Kanals keine Notwendigkeit, bestimmte Daten in einer Verkehrslast-Mitteilung (zB. eine Kennzeichnung für das sendende Terminal) mitzuschicken. Bedingt durch die feste Anzahl von Bits, die auf dem kollisionsbehafteten Kanal bei Verwendung der möglichen Spreizfaktoren übertragen werden können und die in der Regel nicht genau mit der Anzahl Bits, die tatsächlich übertragen werden müssen, übereinstimmen, müssen in der Regel für die Messwert-Mitteilung nutzlose Stopfbits mitgesendet werden, welche die Anzahl der tatsächlich zu übertragenden Bits auf die Anzahl der Bits, die der kollisionsbehaftete Kanal bei einem gegebenen Spreizfaktor übertragen kann, ergänzt. Diese Verringerung der zu sendenden Daten verringert die in einer Zelle vorhandene Interferenz Weiterhin bedeutet die Verwendung des exklusiv zugeteilten Signalisierungskanals eine Interferenzreduktion, da kein Datenverlust infolge von Kollisionen auftreten kann, wie es beim kollisionsbehafteten Kanal jedoch der Fall ist. Dies trägt insbesondere zu einer schnelleren Signalisierung der Schwellenüberschreitung bei, was sich wiederum günstig auf die effiziente Nutzung der vorhandenen Funkressourcen auswirkt. Gerade bei Verkehrprofilen mit starken Schwankungen der Datenrate, aber einem Datenratenmittelwert, der über den kollisionsbehafteten Kanal grundsätzlich noch übertragen werden kann, ergeben sich häufige Verkehrslast-Mitteilungen, die dann auch einen häufigen Zugriff auf den kollisionsbehafteten Kanal nach sich ziehen und damit einen Datenverlust durch Kollisionen bewirken.

In Patentanspruch 4 wird näher die Korrelation und Detektion einer empfangenen Signalisierungssequenz angegeben, die beispielsweise einer Gold-, Kasami- oder Golay-Sequenz (Anspruch 5) sein kann.

Ein Terminal kann auch eine Signalisierungssequenz aussenden, wenn eine bestimmte Summe der Füllstände aller Puffer eine Schwelle überschritten hat (Anspruch 6). Nach Umschalten von dem kollisionsbehafteten Kanal auf einen nur dem Terminal zugewiesenen Kanal können dann weitere Informationen über die Verkehrslast des Terminals über diesen Nutzkanal übertragen werden (Anspruch 7).

Die Erfindung bezieht sich ferner auf eine Funknetzwerk-Steuerung, auf ein Terminal und auf ein Verfahren zum Austausch von Nutz- und Steuerdaten in einem drahtlosen Netzwerk.

Ausführungsbeispiele der Erfindung werden nachstehend anhand der Fig. näher erläutert. Es zeigen:
- Fig. 1: ein drahtloses Netzwerk mit einer Funknetzwerk-Steuerung und mehreren Terminals,
- Fig. 2: ein Schichtenmodell zur Erläuterung verschiedener Funktionen eines Terminals oder einer Funknetzwerk-Steuerung,
- Figs. 3 und 4: Folgen von Detektionsfenstern für ein in einer Funknetzwerk-Steuerung verwendetes Matched-Filter in Bezug auf einen Referenzrahmen und
- Fig. 5: zwei beispielhafte von zwei Terminals ausgesendeten Signalisierungssequenzen und die entsprechenden Detektionsfenster.

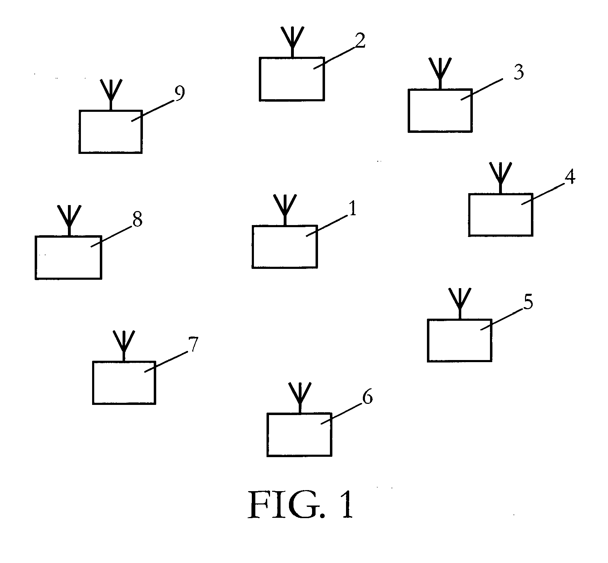

In Fig. 1 ist ein drahtloses Netzwerk, z.B. Funknetzwerk, mit einer Funknetzwerk-Steuerung (Radio Network Controller = RNC) 1 und mehreren Terminals 2 bis 9 dargestellt. Die Funknetzwerk-Steuerung 1 ist für Steuerung aller am Funkverkehr beteiligten Komponenten verantwortlich, wie z.B. der Terminals 2 bis 9. Ein Steuer- und Nutzdatenaustausch findet zumindest zwischen der Funknetzwerk-Steuerung 1 und den Terminals 2 bis 9 statt. Die Funknetzwerk-Steuerung 1 baut jeweils eine Verbindung zur Übertragung von Nutzdaten auf.

In der Regel sind die Terminals 2 bis 9 Mobilstationen und die Funknetzwerk-Steuerung 1 ist fest installiert. Eine Funknetzwerk-Steuerung 1 kann gegebenenfalls aber auch beweglich bzw. mobil sein.

In dem drahtlosen Netzwerk werden beispielsweise Funksignale nach dem FDMA-, TDMA- oder CDMA-Verfahren (FDMA = frequency division multiplex access, TDMA= time division multiplex access, CDMA= code division multiplex access) oder nach einer Kombination der Verfahren übertragen.

Beim CDMA-Verfahren, das ein spezielles Code-Spreiz-Verfahren (code spreading) ist, wird eine von einem Anwender stammende Binärinformation (Datensignal) mit jeweils einer unterschiedlichen Codesequenz moduliert. Eine solche Codesequenz besteht aus einem pseudo-zufälligen Rechtecksignal (pseudo noise code), dessen Rate, auch Chiprate genannt, in der Regel wesentlich höher als die der Binärinformation ist. Die Dauer eines Rechteckimpulses des pseudo-zufälligen Rechtecksignals wird als Chipintervall T_{C} bezeichnet. 1/T_{C} ist die Chiprate. Die Multiplikation bzw. Modulation des Datensignals mit dem pseudo-zufälligen Rechtecksignal hat eine Spreizung des Spektrums um den Spreizungsfaktor N_{C} = T/T_{C} zur Folge, wobei T die Dauer eines Rechteckimpulses des Datensignals ist.

Nutzdaten und Steuerdaten zwischen wenigstens einem Terminal (2 bis 9) und der Funknetzwerk-Steuerung 1 werden über von der Funknetzwerk-Steuerung 1 vorgegebene Kanäle übertragen. Ein Kanal ist durch einen Frequenzbereich, einen Zeitbereich und z.B. beim CDMA-Verfahren durch einen Spreizungscode bestimmt. Die Funkverbindung von der Funknetzwerk-Steuerung 1 zu den Terminals 2 bis 9 wird als Dowlink und von den Terminals zur Funknetzwerk-Steuerung 1 als Uplink bezeichnet. Somit werden über Downlink-Kanäle Daten von der Funknetzwerk-Steuerung 1 zu den Terminals und über Uplink-Kanäle Daten von Terminals zur Funknetzwerk-Steuerung 1 gesendet.

Beispielsweise kann ein Downlink-Steuerkanal vorgesehen sein, der benutzt wird, um von der Funknetzwerk-Steuerung 1 Steuerdaten vor einem Verbindungsaufbau an alle Terminals 2 bis 9 zu verteilen. Ein solcher Kanal wird als Downlink-Verteil-Steuerkanal (broadcast control channel) bezeichnet. Zur Übertragung von Steuerdaten vor einem Verbindungsaufbau von einem Terminal 2 bis 9 zur Funknetzwerk-Steuerung 1 kann beispielsweise ein von der Funknetzwerk-Steuerung 1 zugewiesener Uplink-Steuerkanal verwendet werden, auf den aber auch andere Terminals 2 bis 9 zugreifen können. Ein Uplink-Kanal, der von mehreren oder allen Terminals 2 bis 9 benutzt werden kann, wird als gemeinsamer Uplink-Kanal (common uplink channel) bezeichnet. Nach einem Verbindungsaufbau z.B. zwischen einem Terminal 2 bis 9 und der Funknetzwerk-Steuerung 1 werden Nutzdaten über einen Downlink- und ein Uplink-Nutzkanal übertragen. Kanäle, die nur zwischen einem Sender und einem Empfänger aufgebaut werden, werden als dedizierte Kanäle bezeichnet. In der Regel ist ein Nutzkanal ein dedizierter Kanal, der von einem dedizierten Steuerkanal zur Übertragung von verbindungsspezifischen Steuerdaten begleitet werden kann. Zur Registrierung eines Terminals 2 bis 9 bei einer Funknetzwerk-Steuerung 1 ist ein kollisionsbehafteter Kanal zuständig, der im folgenden als RACH-Kanal (RACH = Random Access Channel) bezeichnet wird. Über einen solchen RACH-Kanal können auch Datenpakete beispielsweise für Nachrichten über verschiedene Zustände (Messergebnisse) im Terminal übertragen werden.

Damit Nutzdaten zwischen der Funknetzwerk-Steuerung 1 und einem Terminal ausgetauscht werden können, ist es erforderlich, dass ein Terminal 2 bis 9 mit der Funknetzwerk-Steuerung 1 synchronisiert wird. Beispielsweise ist aus dem GSM-System (GSM = Global System for Mobile communication) bekannt, in welchem eine Kombination aus FDMA-und TDMA-Verfahren benutzt wird, dass nach der Bestimmung eines geeigneten Frequenzbereichs anhand vorgegebener Parameter die zeitliche Position eines Rahmens bestimmt wird (Rahmensynchronisation), mit dessen Hilfe die zeitliche Abfolge zur Übertragung von Daten erfolgt. Ein solcher Rahmen ist immer für die Datensynchronisation von Terminals und Funknetzwerk-Steuerung 1 bei TDMA-, FDMA- und CDMA-Verfahren notwendig. Ein solcher Rahmen kann verschiedene Unter- oder Subrahmen enthalten oder mit mehreren anderen aufeinanderfolgenden Rahmen einen Superrahmen bilden. Aus Vereinfachungsgründen wird im folgenden von einem Rahmen ausgegangen, der als Referenzrahmen bezeichnet wird.

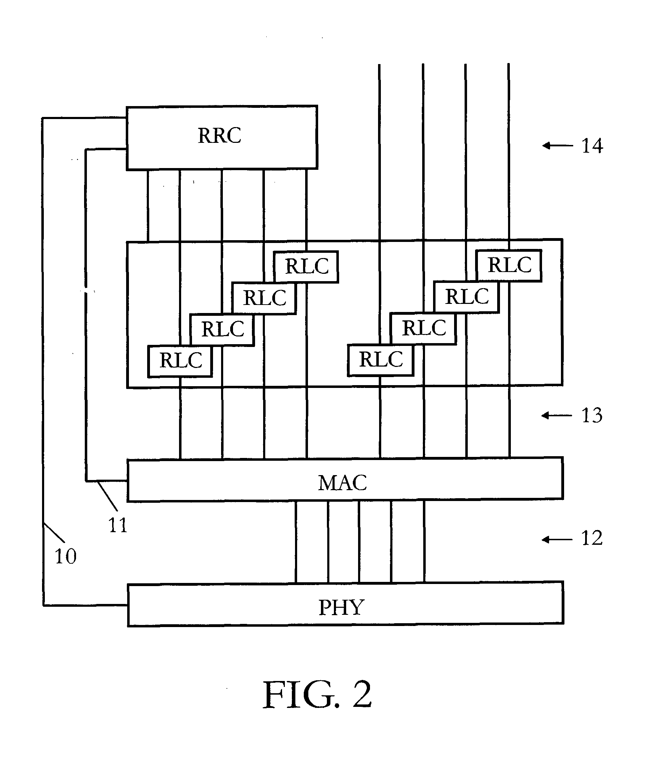

Die Steuer- und Nutzdatenaustausch über die Funkschnittstelle zwischen der Funknetzwerk-Steuerung 1 und den Terminals 2 bis 9 kann mit dem in Fig 2 dargestellten, beispielhaften Schichtenmodell oder Protokollarchitektur (vgl. z.B. 3rd Generation Partnership Project (3GPP); Technical Specification Group (TSG) RAN; Working Group 2 (WG2); Radio Interface Protocol Architecture; TS 25.301 V3.2.0 (1999-10)) erläutert werden. Das Schichtenmodell besteht aus drei Protokollschichten: der physikalischen Schicht PHY, der Datenverbindungsschicht mit den Unterschichten MAC und RLC (in Fig 2 sind mehrere Objekte der Unterschicht RLC dargestellt) und der Schicht RRC. Die Unterschicht MAC ist für die Medienzugriffssteuerung (Medium Access Control), die Unterschicht RLC für die Funkverbindungssteuerung (Radio Link Control) und die Schicht RRC für die Funkverwaltungssteuerung (Radio Resource Control) zuständig Die Schicht RRC ist für die Signalisierung zwischen den Terminals 2 bis 9 und der Funknetzwerk-Steuerung 1 verantwortlich Die Unterschicht RLC dient zur Steuerung einer Funkverbindung zwischen einem Terminal 2 bis 9 und der Funknetzwerk-Steuerung 1. Die Schicht RRC steuert die Schichten MAC und PHY über Steuerungsverbindungen 10 und 11. Hiermit kann die Schicht RRC die Konfiguration der Schichten MAC und PHY steuern. Die physikalische Schicht PHY bietet der MAC-Schicht Transportverbindungen 12 an. Die MAC-Schicht stellt der RLC-Schicht logische Verbindungen 13 zur Verfügung. Die RLC-Schicht ist über Zugangspunkte 14 von Applikationen erreichbar.

Wie oben erwähnt, überträgt ein Terminal 2 bis 9 über einen RACH-Kanal Datenpakete für bestimmte Anwendungen (z.B. Internet-Zugriff) solange die Kapazität des RACH-Kanals ausreichend ist. Falls eine Kapazitätsüberschreitung eintritt oder zu erwarten ist, veranlasst die Funknetzwerk-Steuerung 1, dass das Terminal 2 bis 9 diese Datenpakete über einen dedizierten Kanal weiter überträgt und den RACH-Kanal nicht weiter benutzt.

Zur Kapazitätsmessung finden in jedem Terminal 2 bis 9 Verkehrslastmessungen über die Füllstände der Puffer in den verschiedenen Schichten (beispielsweise RLC-Schicht) statt. Diese Puffer, die in der Fig. 2 nicht näher dargestellt sind, dienen zur Zwischenspeicherung von Datenpaketen, etwa um Übertragungswiederholungen zu ermöglichen. Überschreitet der Füllstand eines oder mehrerer Puffer eine vorgegebene Schwelle, wird dies der Funknetzwerk-Steuerung 1 mitgeteilt. Die Füllstandsmessung wird von einer nicht näher dargestellten Messvorrichtung zur Kapazitätsmessung durchgeführt. Die Mitteilung, dass der Füllstand eines oder mehrerer Puffer eine vorgegebene Schwelle überschritten hat, erfolgt erfindungsgemäss über eine weiter unten erläuterte Signalisierungssequenz. Die von einer Funknetzwerk-Steuerung 1 detektierte Signalisierungssequenz gibt nur an, ob der Füllstand eines oder mehrerer Puffer oder die Summe der Füllstände aller Puffer in einem Terminal 2 bis 9 eine vorgegebene Schwelle überschritten hat.

Aus der EP 0 967 742 A2 ist bekannt, dass eine Signalisierungssequenz zur Informationsübertragung eingesetzt werden kann. Eine solche Signalisierungssequenz ist ein pseudozufälliges Rechtecksignal, welches von einem Terminal 2 bis 9 ausgesendet wird. Die Funknetzwerk-Steuerung 1 kann beispielsweise während der Registrierung eines Terminals 2 bis 9 im Netzwerk über einen Downlink-Verteil-Steuerkanal (downlink broadcast control channel) die zu verwendende Signaliserungssequenz und den Zeitpunkt (Sequenz-Startzeitpunkt) der Sendung der Signalisierungssequenz bezogen auf den Referenzrahmen übermitteln. Das bedeutet, dass jedem Terminal 2 bis 9 daher zur Aussendung einer Signalisierungssequenz von der Basisstation ein Uplink-Signalisierungskanal zugewiesen wird über den Signalisierungssequenzen übertragen werden. Ein Signalisierungskanal ist also durch die bestimmte Signalisierungssequenz und deren Startzeitpunkt realisiert und ist einem Terminal 2 bis 9 exklusiv zugeteilt.

Die Terminals 2 bis 9 können eine gleiche Signalisierungssequenz oder Gruppen von Terminals 2 bis 9 unterschiedliche Signalisierungssequenzen verwenden. Die Terminals mit den gleichen Signalisierungssequenzen werden von der Funknetzwerk-Steuerung 1 durch die unterschiedlichen Zeitpunkten (Sequenz-Startzeitpunkten) unterschieden.

Eine Funknetzwerk-Steuerung 1 enthält ein einziges Matched-Filter und einen nachgeordneten Impulsdetektor zur Detektion der von den Terminals ausgesendeten Signalisierungssequenzen. Das Matched-Filter wird mit einer Taktrate getaktet, die wenigstens gleich der maximalen Chiprate ist, wenn eine Codespreizung verwendet wird, oder gleich der maximalen Bitrate, wenn keine Codespreizung verwendet wird. Von den Terminals werden solche Signalisierungssequenzen ausgesendet, die eine gute Autokorrelationseigenschaft aufweisen. Das bedeutet, dass die sich am Ausgang des Matched-Filters aus aufeinanderfolgenden Signalisierungssequenzen verschiedener Terminals ergebenen Impulse innerhalb eines Detektionsfensters von dem Impulsdetektor eindeutig detektiert werden können. Die Wahl der Taktrate in Abhängigkeit von der maximalen Chiprate bzw. Bitrate und einer Signalisierungssequenz mit guten Autokorrelationseigenschaften ermöglicht, dass die aufeinanderfolgenden Signalisierungssequenzen einen minimalen zeitlichen Abstand zwischen Ihren Startzeitpunkten aufweisen. Weiterhin sollte die Signalisierungssequenz eine gute Kreuzkorrelationseigenschaft aufweisen, d.h. die Korrelation zu anderen im Netzwerk übertragenen Signalen sollte gering sein. Somit werden einerseits die anderen im Netzwerk übertragenen und vom Matched-Filter empfangenen Signale vom Impulsdetektor als ein vernachlässigbares Rauschsignal und andererseits werden die Signalisierungssequenzen von anderen Schaltungselementen in der Funknetzwerk-Steuerung 1, welche die anderen im Netzwerk übertragenen Signale verarbeiten, als vernachlässigbares Rausch- bzw.- Störsignal interpretiert. Eine solche Signalisierungssequenz mit guten Auto- und Kreuzkorrelations-Eigenschaften ist beispielsweise die aus dem Buch "J.G. Proakis: Digital Communications von J.G. Proakis, Third Edition, McGraw-Hill International Editions, 1995, Seiten 724 bis 729" bekannte Sequenz von Gold und Kasami.

Die sich am Ausgang des Matched-Filters ergebenen Impulse sind ein Maß für die Energie der Signalisierungssequenzen. Die Länge und die im Gegensatz zu den anderen zu übertragenden Signale niedrige Amplitude der Signalisierungssequenz bestimmt demzufolge die Impulshöhe am Ausgang des Matched-Filters.

Der Sequenz-Startzeitpunkt einer Signalisierungssequenz sollte von der Basisstation so festgelegt werden, dass das Matched-Filter in der Basisstation einen Impuls nach der Detektion einer Signalisierungssequenz eines ihr zugeordneten Terminals in einem vorgegebenen Detektionsfenster erzeugt. Dieses Detektionsfenster weist die Dauer oder Länge δ auf.

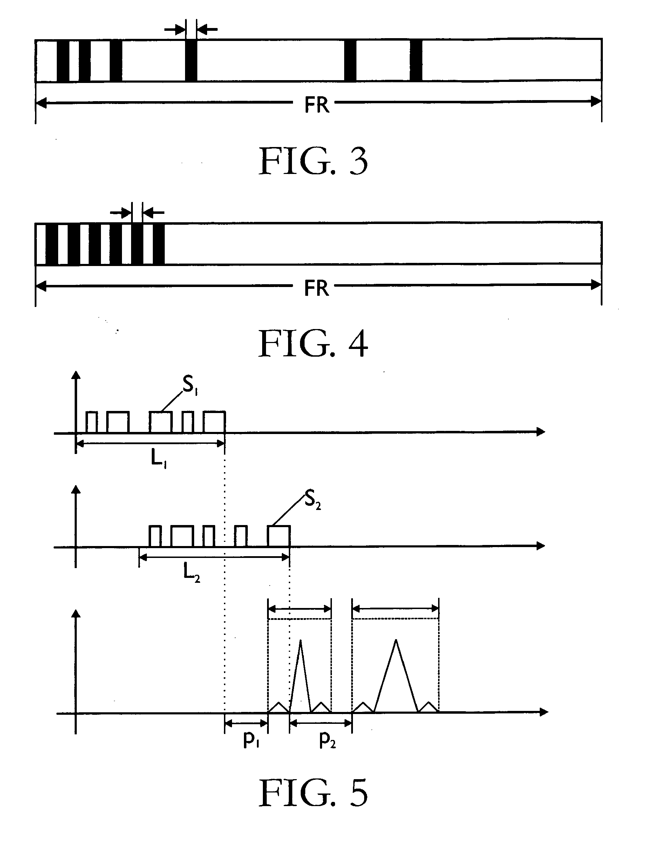

Prinzipiell lassen sich die Signalisierungssequenzen zu beliebigen Sequenz-Startzeitpunkten aussenden. Ein Sequenz-Startzeitpunkt ist mit dem Auftreten eines Impulses am Ausgang des Matched-Filters verbunden. Die Detektion beginnt nach Aussendung einer Signalisierungssequenz und einer durch die Kanaleigenschaft einer Verbindung zwischen wenigstens einem Terminal und einer Basisstation bedingten Verzögerung. Als Kanaleigenschaft werden die physikalischen Kenngrössen eines Kanals bezeichnet. Eine Kanaleigenschaft ergibt sich beispielsweise aus der Entfernung zwischen Terminal und Basisstation. Folglich ist es möglich, dass der Impulsdetektor unterschiedlich breite Detektionsfenster für die verschiedenen Terminals benutzt. Der Einfachheit halber wird hier eine einheitliche Breite des Detektionsfensters gewählt. Die Folge beliebig auftretender Detektionsfenster der Dauer δ ist in Bezug auf den Referenzrahmen der Länge FR in Fig 3 gezeigt. Das Matched-Filter erzeugt aus einer empfangenen Signalisierungssequenz in der Regel eine Impulsfolge mit einem Hauptimpuls und mehreren häufig symmetrisch um den Hauptimpuls verteilten Nebenimpulsen. Die Amplitude der Nebenimpulse ist regelmässig kleiner als die Amplitude des Hauptimpulses.

Die verschiedenen vom Matched-Filter erzeugten Hauptimpulse müssen einen ausreichenden Abstand (guard time) aufweisen, damit sich die am Ausgang des Matched-Filters erscheinenden, durch den Kanal verzerrten Impulsfolgen der unterschiedlichen Terminals nicht so überlappen, dass keine eindeutige Detektion möglich wird. Bei einer bestimmten Überlappung kann die Basisstation die Impulse nicht eindeutig einem Terminal zuordnen. Die Breite oder Dauer δ des Detektionsfensters muss also mindestens gleich der Hauptimpulsbreite sein, die sich ohne Kanaleinfluss ergibt, und einem zusätzlichen kanalabhängigen Sicherheitsintervall sein. Daraus ergibt sich auch der Abstand von aufeinanderfolgenden, gleichen Signalisierungssequenzen. Es muss jedoch keine Rücksicht auf die zeitlichen Abstände von zwei unterschiedlichen Signalisierungssequenzen genommen werden, die von unterschiedlichen Basisstationen stammen, weil aufgrund geringer Korrelation ein dem Matched-Filter nachgeschalteter Impulsdetektor eine Signalisierungssequenz einer anderen Basisstation bzw. Funkzone als nicht störendes Rauschen detektiert.

Um möglichst viele Signalisierungssequenzen innerhalb eines vorgegebenen Zeitraumes auszusenden, kann erfindungsgemäss ein optimierter Abstand der Sequenz-Startzeitpunkte vorgesehen sein. Das bedeutet, dass jeweils die Breite des Detektionsfensters in Abhängigkeit von den Kanaleigenschaften zwischen einem Terminal und der Basisstation ermittelt wird. Eine andere erfindungsgemässe, einfacher zu realisierende Möglichkeit besteht darin, dass die Signalisierungssequenzen aufeinanderfolgend mit einem konstanten Abstand gesendet werden. Bei der Bestimmung des konstanten Abstandes sind die schlechtesten Kanaleigenschaften zu berücksichtigen. Fig. 4 zeigt die kontinuierlich aufeinanderfolgenden Detektionsfenster in Bezug auf den Referenzrahmen der Längs FR, die sich als Folge der mit einem vorgegebenen konstanten Abstand ausgesendeten Signalisierungssequenzen ergeben.

In Fig. 5 sind zwei beispielhafte Signalisierungssequenzen S₁ und S₂ gezeigt, welche die Sequenzdauer oder Sequenzlänge L₁ und L₂ aufweisen. Nach einer durch die Kanaleigenschaften bedingten Verzögerungszeit p₁ und p₂ startet jeweils der Detektionsvorgang bzw. das Detektionsfenster der Länge δ. In einem solchen Detektionsfenster erscheint ein einer Signalisierungssequenz zugeordneter Hauptimpuls und Nebenimpulse.

Der durch Signalisierungssequenz und Sendezeitpunkt eindeutig bestimmte Signalisierungskanal kann jeweils einem Puffer in einem Terminal zugewiesen werden, um genau das Überschreiten der Füllstandsschwelle in diesem Puffer anzuzeigen. Das bedeutet, dass einem Terminal, welches n Puffer enthält, höchstens n Signalisierungssequenzen zugewiesen werden. In der Regel reicht es aber aus, wenn die Funknetzwerk-Steuerung 1 einem Terminal 2 bis 9 einen einzigen Signalisierungskanal zuordnet, damit das Terminal 2 bis 9 das Überschreiten der Schwelle des Füllstandes wenigstens eines Puffers (etwa des am meisten belasteten) oder der Summe der Füllstände aller Puffer über diesen Signalisierungskanal anzeigt.

Die Übertragung einer Signalisierungssequenz von einem Terminal 2 bis 9 zu der Funknetzwerk-Steuerung 1 kann als Verkehrslast-Mitteilung betrachtet werden. Nachdem ein Terminal 2 bis 9 infolge einer Anweisung der Funknetzwerksteuerung 1 angewiesen wurde die weitere Datenübertragung auf einem dezidierten Kanal fortzuführen und dieser Kanal benutzt wird, kann das Terminal 2 bis 9 weitere Verkehrslast-Mitteilungen über den dezidierten Kanal senden. Eine solche Verkehrlast-Mitteilung über den dedizierten Kanal kann nicht nur die Information enthalten, dass ein Füllstand überschritten worden ist, sondern weitere Informationen (zB. welches RLC-Objekt betroffen war und die Verkehrslast-Mitteilung veranlasst hat) enthalten.

Der Vorteil der Verwendung des durch Signalisierungssequenz und Sendezeitpunkt bestimmten exklusiven Signalisierungskanals zur Mitteilung einer Schwellenüberschreitung liegt darin, dass deutlich weniger Daten an die Funknetzwerksteuerung 1 geschickt werden müssen. Da der Signalisierungskanal einem Terminal exklusiv zugeteilt ist, besteht anders als bei der Verwendung des RACH-Kanals keine Notwendigkeit, eine Terminal-ID und eine Nummer, die den Typ des Messwertreports angibt, in einer Verkehrslast-Mitteilung mitzuschicken. Bedingt durch die festen Anzahl von Bits, die auf dem RACH-Kanal bei Verwendung der möglichen Spreizfaktoren übertragen werden können und die in der Regel nicht genau mit der Anzahl Bits, die tatsächlich übertragen werden müssen, übereinstimmen, müssen in der Regel für die Messwert-Mitteilung nutzlose Stopfbits mitgesendet werden, welche die Anzahl der tatsächlich zu übertragenden Bits auf die Anzahl der Bits, die der RACH-Kanal bei einem gegebenen Spreizfaktor übertragen kann, ergänzt. Diese Verringerung der zu sendenden Daten verringert die in einer Zelle vorhandene Interferenz. Weiterhin bedeutet die Verwendung des exklusiv zugeteilten Signalisierungskanals eine Interferenzreduktion, da kein Datenverlust infolge von Kollisionen auftreten kann, wie es beim RACH-Kanal jedoch der Fall ist. Dies trägt insbesondere zu einer schnelleren Signalisierung der Schwellenüberschreitung bei, was sich wiederum günstig auf die effiziente Nutzung der vorhandenen Funkressourcen auswirkt. Gerade bei Verkehrprofilen mit starken Schwankungen der Datenrate, aber einem Datenratenmittelwert, der über den RACH-Kanal grundsätzlich noch übertragen werden kann, ergeben sich häufige Verkehrslast-Mitteilungen, die dann auch einen häufigen Zugriff auf den RACH-Kanal nach sich ziehen und damit einen Datenverlust durch Kollisionen bewirken.

## Patentansprüche

1. Drahtloses Netzwerk mit einer Funknetzwerk-Steuerung (1) und mehreren zugeordneten Terminals (2 bis 9) zum Austausch von Nutz- und Steuerdaten, die jeweils wenigstens einen Puffer zur Zwischenspeicherung von zur Funknetzwerk-Steuerung (1) zu übertragenen Datenpaketen über einen kollisionsbehafteten Kanal und eine Messvorrichtung zur Füllstandsmessung wenigstens eines Puffers enthalten,
**dadurch gekennzeichnet,**
**dass** wenigstens eines der mehreren zugeordneten Terminals (2 bis 9) bei Überschreiten einer Füllstandsschwelle eines Puffers oder mehrerer Puffer zur Sendung einer Signalisierungssequenz zu einem von der Funknetzwerk-Steuerung (1) jeweils vorgegebenen Startzeitpunkt vorgesehen ist,
**dass** die Funknetzwerk-Steuerung (1) eine Vorrichtung zur Korrelation einer von dem betreffenden Terminal (2 bis 9) ausgesendeten Signalisierungssequenz und zur Detektion des aus einer empfangenen und korrelierten Signaliserungssequenz entstandenen Impulses enthält und
**dass** die Funknetzwerk-Steuerung (1) nach Detektion einer dem betreffenden Terminal (2 bis 9) zugeordneten Signalisierungssequenz zur Sendung einer Anweisung an das betreffende Terminal (2 bis 9) zur weiteren Übertragung der Datenpakete einen nur dem Terminal (2 bis 9) zugeordneten Kanal zu verwenden vorgesehen ist.

2. Drahtloses Netzwerk nach Anspruch 1,
**dadurch gekennzeichnet,**
**dass** der wenigstens einem der mehreren zugeordneten Terminals (2 bis 9) zugeordnete Kanal ein dedizierter Kanal ist.

3. Drahtloses Netzwerk nach Anspruch 1,
**dadurch gekennzeichnet,**
**dass** wenigstens eines der mehreren zugeordneten Terminals (2 bis 9) zur Messung der Füllstande eines Puffers oder mehrerer Puffer in der Schicht für die Funkverbindungssteuerung (RLC-Schicht) vorgesehen ist.

4. Drahtloses Netzwerk nach Anspruch 1,
**dadurch gekennzeichnet,**
**dass** die Funknetzwerk-Steuerung (1) ein Matched-Filter zur Erzeugung wenigstens eines Impulses nach Empfang einer Signalisierungssequenz und einen Impulsdetektor enthält und **dass** der Impulsdetektor während eines bestimmten Detektionsfensters, dessen Startzeitpunkt und Dauer durch die Kanaleigenschaften und den Startzeitpunkt einer zu detektierenden Signalisierungssequenz bestimmt ist, zur Detektion des Impulses am Ausgang des Matched-Filters vorgesehen ist.

5. Drahtloses Netzwerk nach Anspruch 1,
**dadurch gekennzeichnet,**
**dass** wenigstens eines der mehreren zugeordneten Terminals (2 bis 9) zur Sendung einer Gold-, Kasami- oder Golay-Sequenz als Signalisierungssequenz zu einem bestimmten Startzeitpunkt vorgesehen ist.

6. Drahtloses Netzwerk nach Anspruch 1,
**dadurch gekennzeichnet,**
**dass** wenigstens eines der mehreren zugeordneten Terminals (2 bis 9) bei Überschreiten einer Summe der Füllstände aller Puffer über eine vorgegebene Schwelle zur Sendung einer Signalisierungssequenz zu einem von der Funknetzwerk-Steuerung (1) jeweils vorgegebenen Startzeitpunkt vorgesehen ist.

7. Drahtloses Netzwerk nach Anspruch 1,
**dadurch gekennzeichnet,**
**dass** wenigstens eines der mehreren zugeordneten Terminals (2 bis 9) nach Empfang der Anweisung und Umschalten auf den zugeordneten Kanal zur Übertragung weitere Informationen über die Verkehrslast des Terminals (2 bis 9) über diesen Nutzkanal vorgesehen ist.

8. Funknetzwerk-Steuerung (1) in einem drahtlosen Netzwerk zum Austausch von Nutz-und Steuerdaten mit mehreren zugeordneten Terminals (2 bis 9),
**dadurch gekennzeichnet,**
**dass** die Funknetzwerk-Steuerung (1) eine Vorrichtung zur Korrelation einer von wenigstens einem der mehreren zugeordneten Terminals (2 bis 9) ausgesendeten Signalisierungssequenz und zur Detektion des aus einer empfangenen und korrelierten Signalisierungssequenz entstandenen Impulses enthält,
**dass** eine zu einem bestimmten Zeitpunkt von dem betreffenden Terminal (2 bis 9) ausgesendete Signalisierungssequenz angibt, dass in dem betreffenden Terminal (2 bis 9) der Füllstand eines Puffers oder mehrerer Puffer überschritten ist, und
**dass** Funknetzwerk-Steuerung (1) nach Detektion einer dem betreffenden Terminal (2 bis 9) zugeordneten Signalisierungssequenz zur Sendung einer Anweisung an das Terminal (2 bis 9) zur weiteren Übertragung der Datenpakete einen nur dem betreffenden Terminal (2 bis 9) zugeordneten Kanal zu verwenden vorgesehen ist.

9. Terminal (2 bis 9) in einem drahtlosen Netzwerk zum Austausch von Nutz-und Steuerdaten mit mindestens einer Funknetzwerk-Steuerung (1) und weiteren Terminals, welches wenigstens einen Puffer zur Zwischenspeicherung von zur Funknetzwerk-Steuerung (1) zu übertragenden Datenpaketen über einen kollisionsbehafteten Kanal und eine Messvorrichtung zur Füllstandsmessung wenigstens eines Puffers enthält,
**dadurch gekennzeichnet,**
**dass** das Terminal (2 bis 9) bei Überschreiten einer Füllstandsschwelle eines Puffers oder mehrerer Puffer zur Sendung einer Signalisierungssequenz zu einem von der Funknetzwerk-Steuerung (1) vorgegebenen Startzeitpunkt vorgesehen ist und
**dass** das Terminal (2 bis 9) zum Empfang einer Anweisung von der die Signalisierungssequenz detektierenden Funknetzwerk-Steuerung (1) vorgesehen ist, dass zur weiteren Übertragung der Datenpakete einen nur dem Terminal (2 bis 9) zugeordneten Kanal zu verwenden ist.

10. Verfahren zum Austausch von Nutz- und Steuerdaten in einem drahtlosen Netzwerk mit einer Funknetzwerk-Steuerung (1) und mehreren zugeordneten Terminals (2 bis 9), die jeweils wenigstens einen Puffer zur Zwischenspeicherung von zur Funknetzwerk-Steuerung (1) zu übertragenen Datenpaketen über einen kollisionsbehafteten Kanal und eine Messvorrichtung zur Füllstandsmessung wenigstens eines Puffers enthalten,
**dadurch gekennzeichnet,**
**dass** eine Signalisierungssequenz zu einem von der Funknetzwerk-Steuerung (1) jeweils vorgegebenen Startzeitpunkt von wenigstens einem der mehreren zugeordneten Terminals (2 bis 9) nach Überschreiten einer Füllstandsschwelle eines Puffers oder mehrerer Puffer ausgesendet wird,
**dass** eine von dem betreffenden Terminal (2 bis 9) ausgesendete und empfangene Signalisierungssequenz in der Funknetzwerk-Steuerung (1) korreliert und der entstandene Impuls detektiert wird und
**dass** eine Anweisung an das betreffendeTerminal (2 bis 9), zur weiteren Übertragung der Datenpakete einen nur dem betreffenden Terminal (2 bis 9) zugeordneten Kanal zu verwenden, von der Funknetzwerk-Steuerung (1) nach Detektion einer dem betreffenden Terminal (2 bis 9) zugeordneten Signalisierungssequenz ausgesendet wird.

## Claims

1. A wireless network comprising a radio network controller (1) and a plurality of associated terminals (2 to 9) for the exchange of useful data and control data, which each include at least one buffer for temporary storage of data packets to be transmitted to the radio network controller (1) via a collision-afflicted channel, and a measuring device for measuring the fill level of at least one buffer
**characterized in that**
at least one of the plurality of associated terminals (2 to 9) on exceeding a fill threshold of a buffer or a plurality of buffers is provided for the transmission of a signalling sequence at a start time determined by the radio network controller (1),
the radio network controller (1) includes a device for correlating a signalling sequence emitted by the terminal in question (2 to 9) and for detecting the resultant pulse from a received and correlated signalling sequence, and
the radio network controller (1) upon detection of a signalling sequence associated with the terminal in question (2 to 9) for transmitting an instruction to the respective terminal (2 to 9) for further transmission of the data packets on a channel only associated for use with the terminal (2 to 9).

2. The wireless network of claim 1,
**characterized in that**
at least one of the channels associated with the plurality of associated terminals (2 to 9) is a dedicated channel.

3. The wireless network of claim 1,
**characterized in that**
at least one of the plurality of associated terminals (2 to 9) is provided for measuring the fill level of one or more buffers in the layer for the radio link control (RLC layer).

4. The wireless network of claim 1,
**characterized in that**
the radio network controller (1) includes a matched filter for generating at least one pulse after reception of a signalling sequence and a pulse detector, and that the pulse detector during a given detection window whose start time and duration is determined by the channel properties and the start time of a signalling sequence to be detected, is provided for detecting the pulse at the output of the matched filter.

5. The wireless network of claim 1,
**characterized in that**
at least one of the plurality of associated terminals (2 to 9) is provided for transmitting a Gold, Kasami or Golay sequence as a signalling sequence at a particular start time.

6. The wireless network of claim 1,
**characterized in that**
at least one of the plurality of associated terminals (2 to 9) on exceeding a sum of the fill levels of all the buffers above a predetermined threshold is provided for sending a signalling sequence at a start time given in each case by the radio network controller (1).

7. The wireless network of claim 1,
**characterized in that**
at least one of the plurality of associated terminals (2 to 9), after receiving the instruction and switching to the associated channel, is provided for the transmission of further information on the traffic load of said terminal (2 to 9) on this user channel.

8. Radio network controller (1) in a wireless network for the exchange of useful data and control data with a plurality of associated terminals (2 to 9),
**characterized in that**
the radio network controller (1) includes a device for correlating a transmitted signalling sequence of at least one of the plurality of associated terminals (2 to 9), and for detecting the resultant pulse from a received and correlated signalling sequence,
the signalling sequence transmitted at a certain time from the terminals concerned (2 to 9) indicates that in the terminal in question (2 to 9) the fill level of a buffer or multiple buffers has been exceeded, and
the radio network controller (1) after detection of a signalling sequence associated with the terminal (2 to 9) is provided for transmitting an instruction to the terminal (2 to 9) for further transmission of the data packets on a channel only intended for use of the terminal (2 to 9) in question.

9. Terminal (2 to 9) in a wireless network for the exchange of useful data and control data with at least one radio network controller (1) and other terminals (2 to 9), which includes at least one buffer for temporary storage of data packets to be transferred via a collision-afflicted channel to the radio network controller (1) and a measuring device for measuring the fill level of at least one buffer,
**characterized in that**
the terminal (2 to 9) on exceeding a threshold level of a buffer or a plurality of buffers is provided with means for sending a signalling sequence at a start time predetermined by the radio network controller (1), and
the terminal (2 to 9) is provided with means for receiving an instruction from the radio network controller (1) detecting the signalling sequence to the effect that only a channel associated with the terminal (2 to 9) is to be used for further transmission of the data packets.

10. A method of exchanging useful data and control data in a wireless network with a radio network controller (1) and several associated terminals (2 to 9), each including at least one buffer for temporary storage of data packets to be transmitted to the radio network controller (1) via a collision-afflicted channel and a measuring device for measuring the fill level of at least one buffer,
**characterized in that**
a signalling sequence is transmitted to at least one of the plurality of associated terminals (2 to 9) at a start time predetermined in each case by the radio network controller (1) after exceeding a level threshold of a buffer or multiple buffers,
a transmitted and received signalling sequence of the terminal concerned (2 to 9) is correlated by the radio network controller (1) and the resulting pulse detected, and
an instruction to the respective terminal (2 to 9) for further transmission of the data packets using a channel only associated with the relevant terminal (2 to 9), is transmitted from the radio network controller (1) after detection of a signalling sequence associated with the terminal (2 to 9) concerned.

## Revendications

1. Réseau sans fil pourvu d'une commande de réseau radio (1) et de plusieurs terminaux (2 à 9) associés permettant l'échange de données utiles et de données de commande, lesquels contiennent respectivement au moins une mémoire tampon permettant le stockage temporaire de paquets de données transférés à une commande de réseau radio (1) par l'intermédiaire d'un canal présentant un risque de collision et un dispositif de mesure permettant la mesure du niveau d'au moins une mémoire tampon,
**caractérisé en ce qu'**au moins un des différents terminaux (2 à 9) associés, lorsqu'un seuil de niveau d'une mémoire tampon ou de plusieurs mémoires tampon est dépassé, est conçu pour envoyer une séquence de signalisation à un instant de démarrage respectivement prédéfini par la commande de réseau radio (1),
**en ce que** la commande de réseau radio (1) contient un dispositif destiné à corréler une séquence de signalisation envoyée par le terminal (2 à 9) concerné et à détecter l'impulsion produite à partir d'une séquence de signalisation reçue et corrélée et
**en ce que** la commande de réseau radio (1) est conçue pour utiliser un canal associé uniquement au terminal (2 à 9), après la détection d'une séquence de signalisation associée au terminal (2 à 9) concerné destinée à envoyer une instruction au terminal (2 à 9) concerné de poursuite du transfert des paquets de données.

2. Réseau sans fil selon la revendication 1,
**caractérisé en ce que** le ou les canaux associés aux différents terminaux (2 à 9) associés sont des canaux dédiés.

3. Réseau sans fil selon la revendication 1,
**caractérisé en ce qu'**au moins un des différents terminaux (2 à 9) associés sont conçus pour mesurer les niveaux d'un tampon ou de plusieurs tampons dans la couche pour la commande de liaison radio (couche RLC).

4. Réseau sans fil selon la revendication 1,
**caractérisé en ce que** la commande de liaison radio (1) contient un filtre accordé permettant de produire au moins une impulsion après réception d'une séquence de signalisation et un détecteur d'impulsion, et **en ce que** le détecteur d'impulsion est conçu pour détecter l'impulsion à la sortie du filtre accordé pendant une fenêtre de détection définie dont l'instant de démarrage et la durée sont définis par les propriétés du canal et l'instant de démarrage d'une séquence de signalisation à détecter.

5. Réseau sans fil selon la revendication 1,
**caractérisé en ce qu'**au moins un des différents terminaux (2 à 9) associés est conçu pour envoyer une séquence de Gold, de Kasami ou de Golay servant de séquence de signalisation à un instant de démarrage défini.

6. Réseau sans fil selon la revendication 1,
**caractérisé en ce qu'**au moins un des différents terminaux (2 à 9) associés est conçu pour envoyer une séquence de signalisation à un instant de démarrage respectivement prédéfini par la commande de réseau radio (1), lorsqu'une somme des niveaux de toutes les mémoires tampon devient supérieure à un seuil prédéfini.

7. Réseau sans fil selon la revendication 1,
**caractérisé en ce qu'**au moins un des différents terminaux (2 à 9) associés, après réception de l'instruction et de passage au canal associé, est conçu pour transférer d'autres informations concernant la charge de trafic du terminal (2 à 9) par l'intermédiaire de ce canal utile.

8. Commande de réseau sans fil (1) dans un réseau sans fil permettant l'échange de données utiles et de données de commande et pourvu de plusieurs terminaux (2 à 9) associés,
**caractérisée en ce que** la commande de réseau radio (1) contient un dispositif destiné à corréler une séquence de signalisation envoyée par au moins un des différents terminaux (2 à 9) associés et à détecter l'impulsion produite à partir d'une séquence de signalisation reçue et corrélée,
**en ce qu'**une séquence de signalisation envoyée à un instant défini par le terminal (2 à 9) concerné indique que, dans le terminal (2 à 9) concerné, le niveau d'une mémoire tampon ou de plusieurs mémoires tampon est dépassé, et
**en ce que** la commande de réseau radio (1) est conçue pour utiliser un canal associé uniquement au terminal (2 à 9) concerné, après détection d'une séquence de signalisation associée au terminal (2 à 9) concerné et destinée à envoyer une instruction au terminal (2 à 9) de poursuite du transfert des paquets de données.

9. Terminal (2 à 9) dans un réseau sans fil permettant l'échange de données utiles et de données de commande et pourvu d'au moins une commande de réseau radio (1) et d'autres terminaux (2 à 9), ce terminal contenant au moins une mémoire tampon permettant le stockage temporaire de paquets de données à transférer à la commande de réseau radio (1) par l'intermédiaire d'un canal présentant un risque de collision et un dispositif de mesure permettant la mesure du niveau d'au moins une mémoire tampon,
caractérisé en ce le terminal (2 à 9), lorsqu'un seuil de niveau d'une mémoire tampon ou de plusieurs mémoires tampon est dépassé, est conçu pour envoyer une séquence de signalisation à un instant de démarrage prédéfini par la commande de réseau radio (1), et
en ce que le terminal (2 à 9) est conçu pour recevoir une instruction de la commande de réseau radio (1) détectant la séquence de signalisation, selon laquelle il convient d'utiliser un canal associé uniquement au terminal (2 à 9) pour la poursuite du transfert des paquets de données.

10. Procédé permettant l'échange de données utiles et de données de commande dans un réseau sans fil pourvu d'une commande de réseau radio (1) et de plusieurs terminaux (2 à 9) associés, lesquels contiennent respectivement au moins une mémoire tampon permettant le stockage temporaire de paquets de données à transférer à une commande de réseau radio (1) par l'intermédiaire d'un canal présentant un risque de collision et un dispositif de mesure permettant la mesure du niveau d'au moins une mémoire tampon,
**caractérisé en ce qu'**une séquence de signalisation à un instant de démarrage respectivement prédéfini par la commande de réseau radio (1) est envoyée par au moins un des différents terminaux (2 à 9) associés, une fois un seuil de niveau d'une mémoire tampon ou de plusieurs tampons dépassé,
**en ce qu'**une séquence de signalisation envoyée et reçue par le terminal (2 à 9) concerné est corrélée dans la commande de réseau radio (1) et l'impulsion produite est détectée, et
**en ce qu'**une instruction d'utilisation d'un canal associé uniquement au terminal (2 à 9) concerné, pour la poursuite du transfert des paquets de données, est envoyée par la commande de réseau radio (1) au terminal (2 à 9) concerné, après détection d'une séquence de signalisation associée au terminal (2 à 9) concerné.
